# EUROPÄISCHE PATENTANMELDUNG

(11) **EP 3 723 247 A1**
(43) Veröffentlichungstag der Anmeldung: **14.10.2020**
(21) Anmeldenummer: 19168720.1
(22) Anmeldetag: 11.04.2019
(51) Int. Cl.: H02K 11/02, H02K 11/33, H02K 9/14

(54) **STÄNDER FÜR EINE ELEKTRISCHE MASCHINE MIT EINEM KONDENSATOR**

(71) Anmelder: Siemens Aktiengesellschaft, 80333 München (DE)
(72) Erfinder: Deeg, Christian, 90518 Altdorf (DE); Kuhn, Harald, 90491 Nürnberg (DE); Maul, Christian, 90489 Nürnberg (DE); Tischmacher, Hans, 91207 Lauf (DE)

(57) **Zusammenfassung**

Die Erfindung betrifft einen Ständer (10) für eine als Innenläufer ausgebildete rotierende elektrische Maschine (12), mit einem Blechpaket (14), das eine Öffnung zum Anordnen eines Läufers (52) der rotierenden elektrischen Maschine (12) bereitstellt, und mit einer Ständerwicklung (38). Der Erfindung liegt die Aufgabe zugrunde, die zumindest teilweise Integration eines Energiewandlers in eine rotierende elektrische Maschine zu verbessern. Es wird vorgeschlagen, dass an einer Außenseite (34) des Blechpakets (14) wenigstens eine erste und wenigstens eine zweite Platte (16, 18) aus einem elektrisch leitfähigen Werkstoff zumindest teilweise radial übereinander angeordnet sind, die zum Ausbilden eines elektrischen Kondensators (20) voneinander elektrisch isoliert sind und die sich zumindest teilweise in einer Umfangsrichtung (22) und in einer axialen Richtung (24) des Ständers (10) erstrecken.

## Beschreibung

Die Erfindung betrifft einen Ständer für eine als Innenläufer ausgebildete rotierende elektrische Maschine, mit einem Blechpaket, das eine Öffnung zum Anordnen eines Läufers der rotierenden elektrischen Maschine bereitstellt, und mit einer Ständerwicklung. Darüber hinaus betrifft die Erfindung auch eine rotierende elektrische Maschine, die als Innenläufer ausgebildet ist, mit einem Ständer und einem drehbar gegenüber dem Ständer angeordneten Läufer, wobei der Ständer eine Öffnung bereitstellt, in der der Läufer angeordnet ist.

Gattungsgemäße elektrische Maschinen sowie Ständer hierfür sind dem Grunde nach dem Stand der Technik umfänglich bekannt, so dass es eines gesonderten druckschriftlichen Nachweises hierfür nicht bedarf. Bei einer rotierenden elektrischen Maschine ist dem Grunde nach ein Ständer als Stator vorgesehen, der in der Regel eine im Wesentlichen kreisförmige Öffnung zum Aufnahme eines als Rotor ausgebildeten Läufers bereitstellt. In der Öffnung ist der Läufer drehbar gelagert angeordnet, wobei zwischen dem Läufer und dem Ständer ein Luftspalt ausgebildet ist.

Eine rotierende elektrische Maschine ist eine Vorrichtung, die elektrische Energie in mechanische Energie, insbesondere Bewegungsenergie, in einem Motorbetrieb und/oder mechanische Energie in eine elektrische Energie in einem Generatorbetrieb umformt. Bei der Bewegung handelt es sich in der Regel um eine Drehbewegung, die vom Läufer gegenüber dem Ständer ausgeführt wird. Der Ständer ist im Unterschied zum Läufer in der Regel drehfest angeordnet, das heißt, bei der Drehbewegung handelt es sich um eine Drehbewegung des Läufers gegenüber dem Ständer.

Der Ständer und der Läufer sind mittels eines magnetischen Flusses verkettet, wodurch im Motorbetrieb die Kraftwirkung, nämlich das Drehmoment, erzeugt wird, die den Läufer gegenüber dem Ständer drehend antreibt. Im Generatorbetrieb wird dem Läufer zugeführte mechanische Energie in Form einer Rotation unter Einwirkung eines Drehmoments in elektrische Energie umgewandelt. Zu diesem Zweck weisen der Ständer und der Läufer jeweils eine von einem Strom durchflossene Wicklung auf. Im Ständer oder im Läufer kann die Wicklung auch durch einen Permanentmagneten gebildet oder ergänzt sein.

Rotierende elektrische Maschinen der gattungsgemäßen Art sind beispielsweise Drehfeldmaschinen, die an ein mehrphasiges, insbesondere dreiphasiges elektrisches Energieversorgungsnetz angeschlossen sind, wie beispielsweise Synchronmaschinen, Synchronmaschinen mit Dämpferkäfig oder dergleichen, sowie auch einphasige elektrische Maschinen, Gleichstrommaschinen, wie Nebenschluss- oder Reihenschlussmaschinen oder dergleichen.

Zumindest ständerseitig ist in der Regel ein Blechpaket vorgesehen, welches dazu dient, den magnetischen Fluss im bestimmungsgemäßen Betrieb in vorgegebener Weise zu führen, um die gewünschte Funktion der rotierenden elektrischen Maschine realisieren zu können oder diese zumindest zu unterstützen. Das Blechpaket besteht in der Regel zumindest teilweise aus einzelnen, untereinander elektrisch isolierten ferromagnetischen Blechen. Die Bleche können je nach Verwendungszweck auch als Dynamoblech, Motorenblech, Transformatorenblech oder dergleichen bezeichnet sein. Derartige Bleche unterliegen der Normung, beispielsweise EN 10106, EN 10107 und/oder dergleichen.

Üblicherweise sind stromführende Wicklungen in das Blechpaket eingelassen, die im bestimmungsgemäßen Betrieb der rotierenden elektrischen Maschine, bei dem die jeweiligen Wicklungen mit einem elektrischen Strom beaufschlagt sind, den entsprechenden magnetischen Fluss bereitstellen. Die Wicklung des Ständers ist häufig in das Blechpaket integriert ausgeführt.

Das Blechpaket bezeichnet also einen aus ferromagnetischen Werkstoffen hergestellten und damit magnetisierbaren, vorzugsweise schichtweise aufgebauten Körper. Die Aufgabe des Blechpakets besteht daher insbesondere darin, in Verbindung mit den stromdurchflossenen Wicklungen den magnetischen Fluss zu führen, beispielsweise zu bündeln.

Im bestimmungsgemäßen Betrieb der rotierenden elektrischen Maschine nimmt der Ständer die Reaktio in Bezug auf ein Läuferdrehmoment auf und stützt sich gegen eine Auflage ab, um drehfest angeordnet zu sein. Die Abstützung kann durch ein Fundament oder dergleichen als Auflage gebildet sein.

Soll ein Energiewandler zumindest teilweise in die rotierende elektrische Maschine integriert werden oder an die rotierende elektrische Maschine zumindest teilweise thermisch angekoppelt werden, ist in der Regel ein möglichst kompakter Aufbau des Energiewandlers, insbesondere seiner Leistungselektronik, gewünscht. Darüber hinaus steigen die Anforderungen an Netzrückwirkungen von Antriebssystemen mit rotierenden elektrischen Maschinen und Energiewandlern weiter an.

Es ist beispielsweise möglich, ein System aus einer rotierenden elektrischen Maschine und einem Energiewandler dadurch zu bilden, dass ein Gleichrichter integriert ist. Dabei können im Wesentlichen zwei Varianten unterschieden werden. Bei einer ersten Variante können Netzrückwirkungen durch einen Einsatz eines selbstgeführten Umrichters als Active Front End (AFE) minimiert werden. Hierbei werden in der Regel jedoch nur sehr kleine Kondensatoren, insbesondere in Bezug auf einen Zwischenkreis, genutzt. Jedoch führt dies dazu, dass ein Hauptvorteil dieses Systems, nämlich eine Minimierung beziehungsweise ein Entfallen eines Schaltschranks, reduziert ist, weil der selbstgeführte Umrichter einen signifikanten Teil des Systemvolumens ausmacht.

Bei einer zweiten Variante wird in der Regel eine netzgeführte Einspeisung (DFE) oder auch eine Lösung mit einer kleinen Kapazität eines Zwischenkreiskondensators (Fundamental Front End - F3E) gewählt. Dabei treten jedoch häufig Probleme in Bezug auf eine Kühlung von Bauteilen auf. Dabei erweisen sich die Kondensatoren des Zwischenkreises als besondere Schwachstelle.

Um die erforderliche elektrische Kapazität erreichen zu können, werden als Zwischenkreiskondensatoren häufig Elektrolytkondensatoren eingesetzt, die eine hohe Ladungsspeicherdichte bezüglich elektrischer Ladung aufweisen. Gleichwohl sind Elektrolytkondensatoren jedoch empfindlich in Bezug auf hohe Temperaturen. Andere Kondensatortypen, beispielsweise Folienkondensatoren oder Keramikkondensatoren sind in Bezug auf eine thermische Belastung unempfindlicher, jedoch haben sie eine deutlich geringere Ladungsspeicherdichte, wodurch sich bei vergleichbarem Bauvolumen auch eine entsprechend geringere elektrische Kapazität einstellt. Dies kann zu Nachteilen in Bezug auf ein Regelverhalten oder auch in Bezug auf einen kompakten Aufbau führen.

Insgesamt hat sich gezeigt, dass mit den vorgenannten Integrationsmöglichkeiten die Netzrückwirkungen ungünstig sein können.

Der Erfindung liegt die Aufgabe zugrunde, die zumindest teilweise Integration eines Energiewandlers in eine rotierende elektrische Maschine weiter zu verbessern.

Als Lösung werden mit der Erfindung ein Ständer sowie eine rotierende elektrische Maschine gemäß den unabhängigen Ansprüchen vorgeschlagen.

Vorteilhafte Weiterbildungen ergeben sich durch Merkmale der abhängigen Ansprüche.

In Bezug auf einen gattungsgemäßen Ständer wird mit der Erfindung insbesondere vorgeschlagen, dass an einer Außenseite des Blechpakets wenigstens eine erste und wenigstens eine zweite Platte aus einem elektrisch leitfähigen Werkstoff zumindest teilweise radial übereinander angeordnet sind, die zum Ausbilden eines elektrischen Kondensators voneinander elektrisch isoliert sind und die sich zumindest teilweise in einer Umfangsrichtung und in einer axialen Richtung des Blechpakets erstrecken.

In Bezug auf eine gattungsgemäße rotierende elektrische Maschine wird insbesondere vorgeschlagen, dass der Ständer gemäß der Erfindung ausgebildet ist.

Die Erfindung basiert unter anderem insbesondere auf dem Gedanken, dass die Kondensatoren eines Energiewandlers, insbesondere Kondensatoren eines Zwischenkreises hinsichtlich der Integration besonders problematisch sind. Wie bereits zuvor erläutert, ist die Nutzung von entsprechenden Elektrolytkondensatoren ungünstig. Daher wird vorliegend die Nutzung von anderen Kondensatortypen bevorzugt, beispielsweise Folienkondensatoren, die im Stand der Technik zum Beispiel eine Topfform oder dergleichen aufweisen. Der Gedanke der Erfindung umfasst nun, dass ein derartiger Folienkondensator abgewickelt an einer äußeren Oberfläche der rotierenden elektrischen Maschine, beispielsweise des Blechpakets oder eines Gehäuses der elektrischen Maschine, angeordnet ist, wodurch der Kondensator über eine äußere Oberfläche des Ständers beziehungsweise seines Blechpakets oder auch seines Gehäuses verteilt angeordnet sein kann. Dadurch ist es möglich, eine große Oberfläche zur Ausbildung eines Kondensators nach Art eines Plattenkondensators bereitzustellen und diesen Kondensator zugleich auf einfache Weise in den Ständer beziehungsweise in die rotierende elektrische Maschine zu integrieren.

Der Kondensator ist somit dem Grunde nach als Plattenkondensator ausgebildet und weist entsprechend der gewünschten Kapazität ausgebildete Platten auf. Der Kondensator weist somit zumindest zwei Platten auf, die seine jeweiligen Elektroden bereitstellen. Zur Vergrößerung der Kapazität kann ferner auch vorgesehen sein, dass mehr als nur zwei Platten übereinander angeordnet sind, sodass ein Schichtaufbau erreicht wird, um eine entsprechend große Kapazität realisieren zu können. Dabei können die Platten hinsichtlich der Elektroden des Kondensators wechselweise in radialer Richtung übereinander angeordnet sein. Die Platten sind vorzugsweise gegenüber unmittelbar benachbart angeordneten Platten elektrisch isoliert.

Auf diese Weise kann natürlich nicht nur ein einziger Kondensator ausgebildet werden, sondern es können bedarfsweise auch mehrere Kondensatoren ausgebildet werden. Diese können sowohl in axialer Richtung als auch in radialer Richtung benachbart zueinander angeordnet sein. Natürlich können die hierdurch gebildeten Kondensatoren in radialer Richtung auch zumindest teilweise übereinander angeordnet sein.

Die Platten sind vorzugsweise aus einem elektrisch gut leitfähigen Werkstoff gebildet, beispielsweise einem Metall, insbesondere Kupfer, Silber, Aluminium, Legierungen hiervon und/oder dergleichen.

Die elektrische Isolation benachbart angeordneter Platten kann durch die Platte selbst realisiert sein, indem die jeweilige Platte beispielsweise eine Oberflächenbeschichtung oder dergleichen aufweist, die die elektrische Isolation zu realisieren vermag. Die Isolation kann zum Beispiel durch eine Oxidschicht auf einer oder beiden Oberflächen der Platte, beispielsweise bei Aluminium oder dergleichen, gebildet sein. Es kann aber auch ein separater Isolationswerkstoff auf der wenigstens einer der Oberflächen aufgebracht sein.

Vorzugsweise ist zum Isolieren zwischen der wenigstens einen ersten und der wenigstens einen zweiten Platte ein Isolationswerkstoff angeordnet. Der Isolationswerkstoff kann als separate Isolierplatte ausgebildet sein, die zwischen der wenigstens einen ersten und der wenigstens einen zweiten Platte angeordnet ist. Als Isolationswerkstoff kommt beispielsweise ein Kunststoff, beispielsweise ein Polyester oder dergleichen, der elektrisch schlecht leitfähig ist, eine Keramikwerkstoff, der Verbundwerkstoff und/oder dergleichen in Frage. Der Isolationswerkstoff kann natürlich auch ein Fluid, beispielsweise ein Isolationsgas, eine Isolationsflüssigkeit, beispielsweise Öl oder dergleichen, umfassen.

Vorzugsweise sind die wenigstens eine erste und die wenigstens eine zweite Platte über den Isolationswerkstoff zumindest teilweise miteinander mechanisch verbunden. Dadurch kann mittels des Isolationswerkstoffs auch ein mechanischer Verbund hergestellt werden, der es erlaubt, die Platten gegenüber einander fixiert anzuordnen. Der Isolationswerkstoff kann natürlich auch dazu genutzt werden, eine mechanische Verbindung mit dem Blechpaket beziehungsweise einem Gehäuse des Ständers beziehungsweise der elektrischen Maschine herzustellen. Beispielsweise kann eine radial unterste der Platten mittels des Isolationswerkstoffs mit dem Blechpaket oder dem Gehäuse verbunden sein.

Vorzugsweise weisen die wenigstens eine erste und die wenigstens eine zweite Platte im Wesentlichen die gleichen mechanischen Abmessungen auf. Darüber hinaus sind sie vorzugsweise im Wesentlichen nicht versetzt zueinander angeordnet, so dass eine möglichst große Kapazität des hierdurch gebildeten Kondensators erreicht werden kann. Bei spezifischen Sonderanwendungen kann jedoch auch ein entsprechender Versatz der Platten zueinander vorgesehen sein, beispielsweise in Umfangsrichtung und/oder auch in axialer Richtung beziehungsweise Längsrichtung der rotierenden elektrischen Maschine.

Darüber hinaus wird vorgeschlagen, dass die wenigstens eine erste und die wenigstens eine zweite Platte zumindest in ihrer Kontur in Umfangsrichtung zum Blechpaket angepasst ausgebildet sind. Ist das Blechpaket beispielsweise rund, insbesondere kreisrund, hinsichtlich seines Außenumfangs ausgebildet, kann vorgesehen sein, dass die Platten entsprechend der Krümmung des Blechpakets, beispielsweise nach Art eines Zylindermantelabschnitts oder dergleichen, ausgebildet sind, so dass insbesondere eine gute Verbindung zwischen den Platten und dem Blechpaket erreicht werden kann. Ist das Blechpaket beispielsweise quaderförmig ausgebildet, kann vorgesehen sein, dass die Platten an zumindest einer der quaderförmigen Seiten in Umfangsrichtung flächig, insbesondere eben ausgebildet und an der jeweiligen Fläche angeordnet sind. Auf diese Weise ist es möglich, nicht nur eine kompakte Integration wenigstens eines Kondensators in die rotierende elektrische Maschine zu ermöglichen, sondern zugleich auch eine gute Verbindung zwischen den wenigstens zwei Platten und dem Ständer herzustellen.

Es wird ferner vorgeschlagen, dass die wenigstens eine erste und die wenigstens eine zweite Platte zumindest mit dem Blechpaket mechanisch verbunden sind. Die mechanische Verbindung kann beispielsweise mittels des Isolationswerkstoffs oder dergleichen hergestellt sein. Es kann jedoch auch eine separate mechanische Verbindung vorgesehen sein, beispielsweise indem die radial unterste der Platten mittels einer Klebverbindung oder unter Zuhilfenahme einer Spannvorrichtung mit dem Blechpaket verbunden ist. Wird eine Spannvorrichtung genutzt, kann vorgesehen sein, dass diese sämtliche der Platten oder zumindest die einen jeweiligen Kondensator ausbildenden Platten mit dem Blechpaket verbindet. Auf diese Weise ist es möglich, die Platten ohne großen Aufwand mit dem Blechpaket zu verbinden. Ist ein Gehäuse vorhanden, kann eine entsprechende Verbindung natürlich anstelle mit dem Blechpaket auch mit dem Gehäuse vorgesehen sein.

Es wird ferner vorgeschlagen, dass die wenigstens eine erste und die wenigstens eine zweite Platte das Blechpaket in Umfangsrichtung umfassen. Hierdurch kann eine besonders große Kapazität erreicht werden. Darüber hinaus ist es natürlich möglich, eine entsprechende Anzahl von voneinander separierten Kondensatoren axial und/oder radial und/oder in Umfangsrichtung beabstandet zueinander auszubilden, die zugleich eine große Kapazität bereitzustellen vermögen.

Darüber hinaus wird vorgeschlagen, dass der Ständer eine Kühleinrichtung mit von einem Kühlfluid durchströmbaren Kanälen umfasst, die zwischen dem Blechpaket einerseits und den den Kondensator bildenden Platten andererseits angeordnet ist. Diese Ausgestaltung hat den Vorteil, dass die Platten und gegebenenfalls auch der Isolationswerkstoff thermisch vom Blechpaket des Ständers entkoppelt werden können. Darüber hinaus können im bestimmungsgemäßen Betrieb in den Platten entstehende Verluste unter Nutzung des Kühlfluids ebenfalls abgeführt werden. Dies erlaubt es, die rotierende elektrische Maschine, insbesondere den Ständer weiter zu kompaktieren und Abmessungen zu reduzieren.

Gemäß einer Weiterbildung wird vorgeschlagen, dass der Ständer ein zumindest das Blechpaket umfassendes Gehäuse aufweist, wobei wenigstens eine der wenigstens einen ersten und der wenigstens einen zweiten Platte an einer Gehäuseaußenseite angeordnet ist. Dem Grunde nach können hier die gleichen Optionen der Realisierung vorgesehen sein, wie sie bereits zuvor für die Anordnung am Blechpaket erläutert worden sind. Es wird deshalb diesbezüglich auf die entsprechenden Ausführungen verwiesen.

Darüber hinaus wird vorgeschlagen, dass das Gehäuse aus einem elektrisch leitfähigen Werkstoff gebildet ist und eine der wenigstens einen ersten und der wenigstens einen zweiten Platte zumindest teilweise durch das Gehäuse gebildet ist. Dadurch kann das Gehäuse selbst als Platte für den Kondensator dienen, wodurch der Aufwand insgesamt weiter reduziert werden kann. Der Werkstoff des Gehäuses kann beispielsweise ein Werkstoff sein, wie er zuvor bereits zur Realisierung der Platten angegeben wurde. Darüber hinaus kann der Werkstoff natürlich auch ein Stahl, beispielsweise Druckguss oder dergleichen sein.

Vorzugsweise weist das Gehäuse von einem Kühlfluid durchströmbare Kanäle auf. Die vom Kühlfluid durchströmbaren Kanäle sind vorzugsweise im Bereich der Gehäuseaußenseite angeordnet. Sie können zum Beispiel dadurch gebildet sein, dass das Gehäuse radial nach außen ragende Rippen umfasst, die sich in axialer Richtung der elektrischen Maschine erstrecken. Die hierdurch gebildeten offenen Kanäle können durch darüber angeordnete Platten, nämlich der wenigstens einen ersten Platte sowie der wenigstens einen zweiten Platte, radial nach außen verschlossen sein, sodass auf diese Weise geschlossene Kühlkanäle gebildet werden können. Die Kühlkanäle können durch ein Kühlfluid wie Luft, ein Edelgas, beispielsweise Helium und/oder dergleichen, durchströmt sein. Natürlich kann als Kühlfluid auch eine Flüssigkeit in Frage kommen, beispielsweise Wasser, Öl oder dergleichen. Je nach Bedarf kann eine entsprechende Ausgestaltung der Kühlkanäle vorgesehen sein, so dass diese fluiddicht sind.

Bezüglich der rotierenden elektrischen Maschine wird insbesondere vorgeschlagen, dass diese einen von der rotierenden elektrischen Maschine umfassten Energiewandler aufweist. Der Energiewandler kann beispielsweise ein Umrichter, insbesondere ein Wechselrichter oder dergleichen sein. Je nach Art der rotierenden elektrischen Maschine kann der Energiewandler jedoch auch ein DC/DC-Wandler oder dergleichen sein. Je nach Art und Anwendung der rotierenden elektrischen Maschine können auch Kombinationen hiervon vorgesehen sein. Da Kondensatoren von Energiewandlern in der Regel Bauteile mit großem Volumen darstellen, kann durch die Erfindung erreicht werden, dass die Integration des Energiewandlers in die rotierende elektrische Maschine erleichtert wird, weil der Kondensator zumindest teilweise durch einen Kondensator am Ständer gemäß der Erfindung, insbesondere nach Art eine Mantelkondensators, gebildet sein kann. Dieser Kondensator kann durch die wenigstens eine erste und die wenigstens eine zweite Platte des erfindungsgemäßen Ständers bereitgestellt werden. Dadurch kann die Integration des Energiewandlers in die rotierende elektrische Maschine erheblich erleichtert werden.

Um die zwischen den Platten ausgebildete elektrische Kapazität nutzen zu können, kann vorgesehen sein, dass an den Platten jeweilige elektrische Anschlüsse ausgebildet sind, die es erlauben, eine elektrische Verbindung mit dem Energiewandler, insbesondere einer Leistungselektronik des Energiewandlers, herzustellen.

Vorzugsweise weist der Energiewandler wenigstens einen Kondensator auf, der durch den Ständer gemäß der Erfindung bereitgestellt ist.

Die für den Ständer angegebenen Vorteile und Wirkungen gelten natürlich gleichermaßen auch für die mit dem erfindungsgemäßen Ständer ausgebildete rotierende elektrische Maschine und umgekehrt.

Weitere Vorteile und Merkmale sind der folgenden Beschreibung eines Ausführungsbeispiels anhand der Figuren zu entnehmen. In den Figuren bezeichnen gleiche Bezugszeichen gleiche Merkmale und Funktionen. Es zeigen:
- FIG 1: eine schematisch perspektivische Darstellung einer Asynchronmaschine; und
- FIG 2: eine schematische vergrößerte Schnittdarstellung eines Ausschnitts eines äußeren Bereichs der elektrischen Maschine gemäß FIG 1.

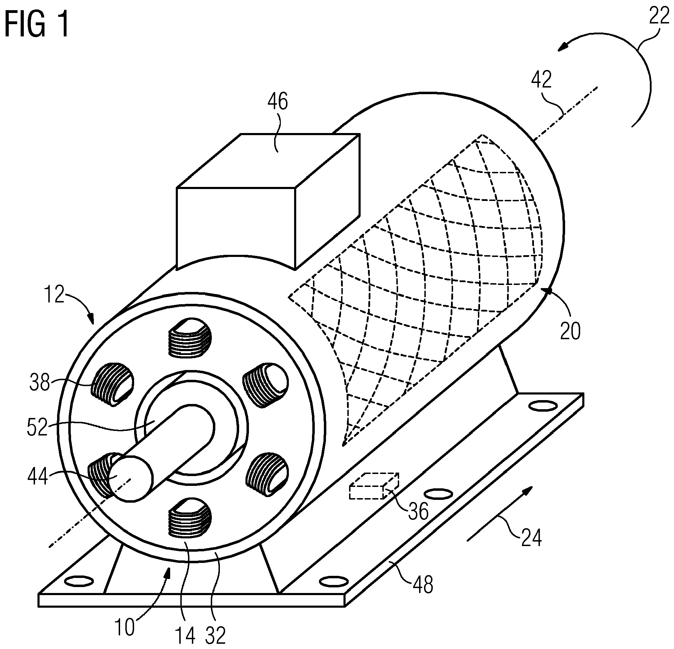

In FIG 1 zeigt in einer schematisch perspektivischen Darstellung als rotierende elektrische Maschine eine Asynchronmaschine 12, die vorliegend als Innenläufer ausgebildet ist. Zu diesem Zweck umfasst die Asynchronmaschine 12 einen Ständer 10 und einen drehbar gegenüber dem Ständer 10 angeordneten Läufer 52. Der Ständer 10 stellt eine nicht bezeichnete Öffnung bereit, in der der Läufer 52 drehbar gelagert angeordnet ist. In der perspektivischen Darstellung gemäß FIG 1 ist ein vorderer Lagerschild nicht dargestellt, so dass die entsprechenden Teile der Asynchronmaschine 12 ersichtlich sind.

Der Läufer 52 weist eine nicht dargestellte Läuferwelle auf, die frontseitig einen Flansch 44 umfasst, an dem der Läufer 52 mit einem zu rotierenden Bauteil mechanisch verbunden werden kann. Der Läufer 52 ist um eine Drehachse 42 drehbar gelagert. Eine Umfangsrichtung ist mit dem Bezugszeichen 22 gekennzeichnet. Eine axiale Richtung, die parallel zur Drehachse 42 ist und einer Längserstreckung der Asynchronmaschine 12 entspricht, ist mit dem Bezugszeichen 24 gekennzeichnet.

Der Ständer 10 umfasst vorliegend ein Blechpaket 14, welches in dieser Ausgestaltungsform öffnungsseitige Nuten aufweist, in denen die Ständerwicklung 38 angeordnet ist. In FIG 1 sind die jeweiligen Wicklungsköpfe der Ständerwicklung 38 dargestellt.

Ein Gehäuse 32 der Asynchronmaschine 12, welches vom Ständer 10 umfasst ist, ist im Wesentlichen zylinderförmig ausgebildet und mit einem Fuß 48 mechanisch verbunden, mittels dem die Asynchronmaschine 12 mit einem Fundament mechanisch verbunden werden kann. In alternativen Ausgestaltungen kann das Gehäuse 32 natürlich auch eine andere Kontur beziehungsweise Form aufweisen, wobei die Kontur beziehungsweise Form vorzugsweise auch von einer Konstruktion und/oder einem Aufbau der jeweiligen elektrischen Maschine abhängig sein kann. Das Gehäuse 32 kann beispielsweise natürlich auch zumindest teilweise quaderförmig oder dergleichen ausgebildet sein.

Im Fuß 48 ist ferner ein Umrichter 36 als Energiewandler angeordnet. In einem oberen Bereich der Asynchronmaschine 12 ist am Gehäuse 32 ferner ein Klemmenkasten 46 angeordnet, mittels dem die Asynchronmaschine 12, insbesondere der Umrichter 36, mit einem nicht dargestellten dreiphasigen Wechselspannungsnetz als Energieversorgungsnetz elektrisch gekoppelt werden kann. Dabei erfolgt die energietechnische Kopplung über den Umrichter 36, so dass mit dem Umrichter 36 der Betrieb der Asynchronmaschine 12 in vorgegebener Weise eingestellt werden kann.

Aus FIG 1 ist ferner ersichtlich, dass an einer Außenseite 34 des Gehäuses 32 ein sogenannter Mantelkondensator 20 angeordnet ist. Der Mantelkondensator 20 ist vorliegend an den Umrichter 36 elektrisch angeschlossen und stellt einen Zwischenkreiskondensator des Umrichters 36 bereit.

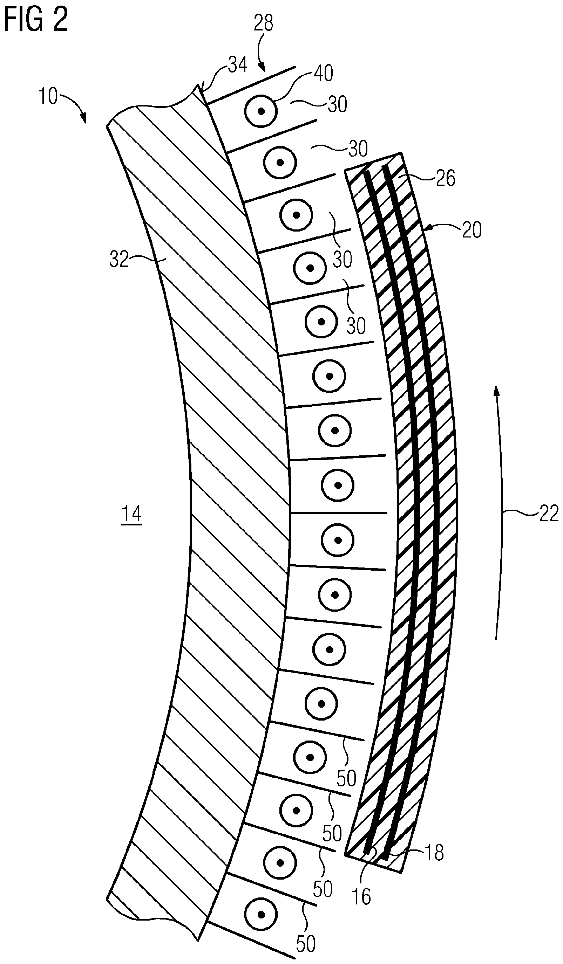

FIG 2 zeigt nun eine vergrößere Schnittdarstellung eines Ausschnitts im Bereich des Mantelkondensators 20 gemäß FIG 1. Aus FIG 2 ist ersichtlich, dass der Mantelkondensator vorliegend eine erste Platte 16 und eine zweite Platte 18 aufweist, die jeweils beabstandet zueinander angeordnet sind. Die erste und zweite Platte 16, 18 sind vorliegend aus einer Kupferlegierung gebildet. Die Platten 16, 18 sind voneinander elektrisch isoliert und erstrecken sich in die Umfangsrichtung 22 und in die axiale Richtung 24 des Ständers 10.

Die beiden Platten 16, 18 sind ferner in einem Kunststoffmaterial 26 als Isolationswerkstoff angeordnet und von diesem umschlossen, sodass zwischen den Platten 16, 18 eine elektrische Isolation ausgebildet ist. Das Kunststoffmaterial 26 dient darüber hinaus zugleich dazu, die Platten 16, 18 nach außen und insbesondere auch bezüglich des Gehäuses 32 elektrisch zu isolieren. Schließlich kann mittels des Kunststoffmaterials 26 der Mantelkondensator 20 mit dem Gehäuse 32 verbunden werden.

Aus FIG 2 ist ferner ersichtlich, dass in Umfangsrichtung 22 an der Außenseite 34 des Gehäuses 32 sich radial nach außen erstreckende Rippen 50 ausgebildet sind, die sich in axialer Richtung 24 erstrecken und durch die Kühlkanäle 30 gebildet sind. Die Kühlkanäle 30 dienen dazu, von Luft als Kühlfluid durchströmt zu werden, um eine Kühlung der Asynchronmaschine 12 im bestimmungsgemäßen Betrieb zu bewirken. An radial äußeren Enden der Rippen 50 ist das Kunststoffmaterial 26 befestigt, sodass eine integrale Baueinheit aus der Asynchronmaschine 12 und dem Mantelkondensator 20 gebildet ist.

In der vorliegenden Ausgestaltung ist der Mantelkondensator 20 lediglich mit zwei einzelnen Platten 16, 18 realisiert. Bei alternativen Ausgestaltungen kann hier natürlich eine Mehrzahl von entsprechenden weiteren Platten ergänzend vorgesehen sein, die vorzugsweise nach Art einer Stapelbauweise beziehungsweise in Schichtbauweise in radialer Richtung übereinander angeordnet sind. Durch eine geeignete Verschaltung der Platten kann auf diese Weise die Kapazität des Mantelkondensators 20 nahezu beliebig vergrößert werden.

Darüber hinaus besteht natürlich die Möglichkeit, den Mantelkondensator 20 so auszubilden, dass zwei oder mehrere einzelne Kondensatoren gebildet werden, die vorzugsweise auch elektrisch isoliert voneinander ausgebildet sind. Zu diesem Zweck können mehrere in radialer Richtung übereinander angeordnete Platten zu unterschiedlichen, vorzugsweise voneinander unabhängigen Kondensatoren genutzt werden.

In der vorliegenden Ausgestaltung ist ferner vorgesehen, dass lediglich ein einziger Mantelkondensator vorgesehen ist. Natürlich können in alternativen Ausgestaltungen auch mehrere Mantelkondensatoren vorgesehen sein, die an der Außenseite 34 angeordnet sind. Schließlich besteht auch die Möglichkeit, wenn die Asynchronmaschine 12 kein eigenes Gehäuse 32 aufweist, die Mantelkondensatoren 20 auch unmittelbar mit dem Blechpaket 14 zu verbinden beziehungsweise gegenüber diesem anzuordnen. Darüber hinaus besteht auch die Möglichkeit, die Mantelkondensatoren 20 zumindest zum Teil auch zwischen dem Gehäuse 32 und dem Blechpaket 14 anzuordnen. Auch Kombinationen der vorgenannten Möglichkeiten können bedarfsweise vorgesehen sein.

Das Kunststoffmaterial 26 ist vorliegend beispielsweise durch einen Polyester gebildet. Darüber hinaus kann es aber auch durch andere geeignete Kunststoffe oder auch keramische Werkstoffe gebildet sein.

Das Ausführungsbeispiel dient ausschließlich der Erläuterung der Erfindung und soll diese nicht beschränken.

Die Ausgestaltung gemäß der FIG 1 und 2 stellt lediglich eine von einer Vielzahl möglicher weiterer Ausgestaltungen basierend auf einer jeweiligen Anordnung beziehungsweise jeweiligen Maschinenkonstruktion dar. Bei anderen Maschinenkonstruktionen kann die Positionierung und/oder Geometrie des Mantelkondensators 20 kann natürlich, vorzugsweise auch an die jeweilige Maschinenkonstruktion angepasst, abweichend gewählt sein.

## Patentansprüche

1. Ständer (10) für eine als Innenläufer ausgebildete rotierende elektrische Maschine (12), mit einem Blechpaket (14), das eine Öffnung zum Anordnen eines Läufers (52) der rotierenden elektrischen Maschine (12) bereitstellt, und mit einer Ständerwicklung (38), **dadurch gekennzeich-net,** dass an einer Außenseite des Blechpakets (14) wenigstens eine erste und wenigstens eine zweite Platte (16, 18) aus einem elektrisch leitfähigen Werkstoff zumindest teilweise radial übereinander angeordnet sind, die zum Ausbilden eines elektrischen Kondensators (20) voneinander elektrisch isoliert sind und die sich zumindest teilweise in einer Umfangsrichtung (22) und in einer axialen Richtung (24) des Ständers (10) erstrecken.

2. Ständer nach Anspruch 1, **dadurch gekenn- zeichnet**, dass die wenigstens eine erste und die wenigstens eine zweite Platte (16, 18) die gleichen mechanischen Abmessungen aufweisen.

3. Ständer nach einem der vorhergehenden Ansprüche, **da- durch gekennzeichnet** , dass zum Isolieren zwischen der wenigstens einen ersten und der wenigstens einen zweiten Platte (16, 18) ein Isolationswerkstoff (26) angeordnet ist.

4. Ständer nach Anspruch 3, **dadurch gekennzeichnet, dass** die wenigstens eine erste und die wenigstens eine zweite Platte (16, 18) über den Isolationswerkstoff (26) zumindest teilweise miteinander mechanisch verbunden sind.

5. Ständer nach einem der vorhergehenden Ansprüche, **da- durch gekennzeichnet**, dass die wenigstens eine erste und die wenigstens eine zweite Platte (16, 18) zumindest in ihrer Kontur in Umfangsrichtung (22) zum Blechpaket (14) angepasst ausgebildet sind.

6. Ständer nach einem der vorhergehenden Ansprüche, **da**- **durch gekennzeichnet**, dass die wenigstens eine erste und die wenigstens eine zweite Platte (16, 18) zumindest mit dem Blechpaket (14) mechanisch verbunden sind.

7. Ständer nach einem der vorhergehenden Ansprüche, **da- durch gekennzeichnet**, dass die wenigstens eine erste und die wenigstens eine zweite Platte (16, 18) das Blechpaket (14) in Umfangsrichtung (22) umfassen.

8. Ständer nach einem der vorhergehenden Ansprüche, **gekennzeichnet durch** eine Kühleinrichtung (28) mit von einem Kühlfluid (40) durchströmbaren Kanälen (30), die zwischen dem Blechpaket (14) einerseits und den den Kondensator (20) bildenden Platten (16, 18) andrerseits angeordnet ist.

9. Ständer nach einem der vorhergehenden Ansprüche, **gekennzeichnet durch** ein zumindest das Blechpaket (14) umfassendes Gehäuse (32), wobei wenigstens eine der wenigstens einen ersten und der wenigstens einen zweiten Platte (16, 18) an einer Gehäuseaußenseite (34) angeordnet sind.

10. Ständer nach Anspruch 9, **dadurchgekennzeichnet**, dass das Gehäuse (32) aus einem elektrisch leitfähigen Werkstoff gebildet ist und eine der wenigstens einen ersten und der wenigstens einen zweiten Platte (16, 18) zumindest teilweise durch das Gehäuse (32) gebildet ist.

11. Ständer nach Anspruch 9 oder 10, **dadurch ge- kennzeichnet,** dass das Gehäuse (32) von einem Kühlfluid (40) durchströmbare Kanäle (30) aufweist.

12. Rotierende elektrische Maschine (12), die als Innenläufer ausgebildet ist, mit einem Ständer (10) und einem drehbar gegenüber dem Ständer (10) angeordneten Läufer (52), wobei der Ständer (10) eine Öffnung bereitstellt, in der der Läufer (52) angeordnet ist, **dadurch gekennzeich net**, dass der Ständer (10) nach einem der vorhergehenden Ansprüche ausgebildet ist.

13. Rotierende elektrisch Maschine nach Anspruch 12, **gekennzeichnet durch** einen von der rotierenden elektrischen Maschine (12) umfassten Energiewandler (36).

14. Rotierende elektrisch Maschine nach Anspruch 13, **da- durch gekennzeichnet**, dass der Energiewandler (36) wenigstens einen Kondensator (20) aufweist, der durch den Ständer (10) bereitgestellt ist.
